Europäisches Patentamt

European Patent Office

Office européen des brevets

(11) Publication number: **0 181 187 B1**

# EUROPEAN PATENT SPECIFICATION

(45) Date of publication of patent specification: **16.09.92**   (51) Int. Cl.5: **H02M 7/48**

(21) Application number: **85307998.6**

(22) Date of filing: **04.11.85**

(54) **Power converter apparatus.**

(30) Priority: **09.11.84 JP 236265/84**

(43) Date of publication of application:
**14.05.86 Bulletin 86/20**

(45) Publication of the grant of the patent:
**16.09.92 Bulletin 92/38**

(84) Designated Contracting States:
**DE FR GB IT SE**

(56) References cited:
**DE-A- 3 130 310**
**US-A- 3 736 516**

**Toshiba Review, Vol.35, No.12, 1980, pages 1065-1067**

(73) Proprietor: **KABUSHIKI KAISHA TOSHIBA**
**72, Horikawa-cho Saiwai-ku**
**Kawasaki-shi Kanagawa-ken 210(JP)**

(72) Inventor: **Seki, Nagataka c/o Patent Division**
**Toshiba Corp Principal Office 1-1 Shibaura**
**1-chome**
**Minato-ku Tokyo(JP)**
Inventor: **Kaneko, Kouichi c/o Patent Division**
**Toshiba Corp Principal Office 1-1 Shibaura**
**1-chome**
**Minato-ku Tokyo(JP)**

(74) Representative: **Kirk, Geoffrey Thomas et al**
**BATCHELLOR, KIRK & CO. 2 Pear Tree Court**
**Farringdon Road**
**London EC1R 0DS(GB)**

EP 0 181 187 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

This invention relates to power converter apparatus which utilises a DC power source having large fluctuations in voltage such as a solar battery or the like.

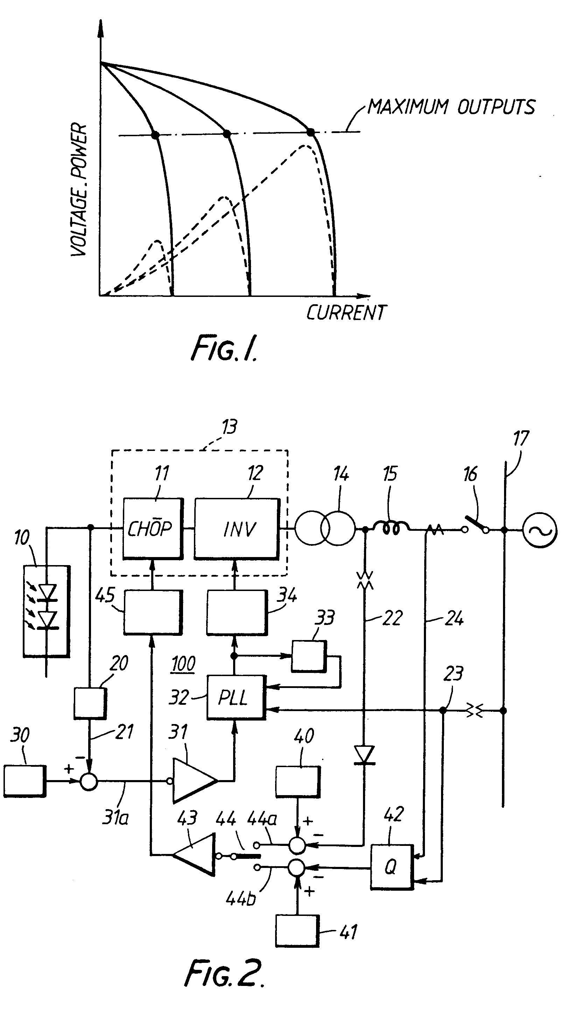

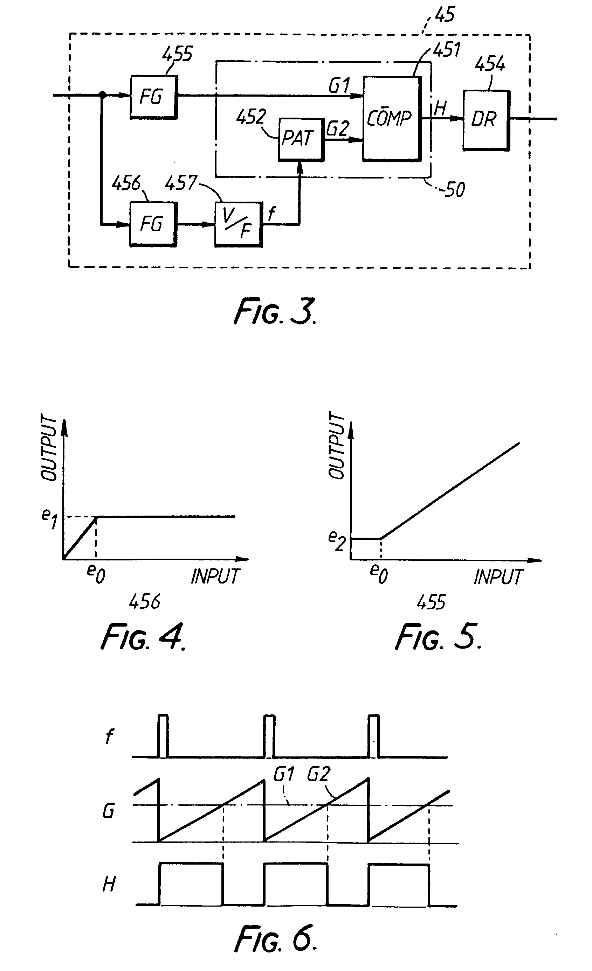

A solar battery has voltage-current characteristics and power-current characteristics as shown in Figure 1 of the accompanying drawings, wherein insolation quantities are defined as parameters. In Figure 1, the voltage current characteristics are shown by solid lines and the power-current characteristics are shown by dotted lines and both sets of characteristics indicate that both the current and power increase as the insolation quantity increases.

As can be seen from the characteristics shown in Figure 1, a solar battery has the disadvantages that, due to its large fluctuations in voltage, power to be supplied decreases when excessive amount of current is drawn. However, it also has the feature that, although the power to be supplied varies drastically depending upon insolation quantities, the maximum voltage for various insolation quantities is maintained substantially constant.

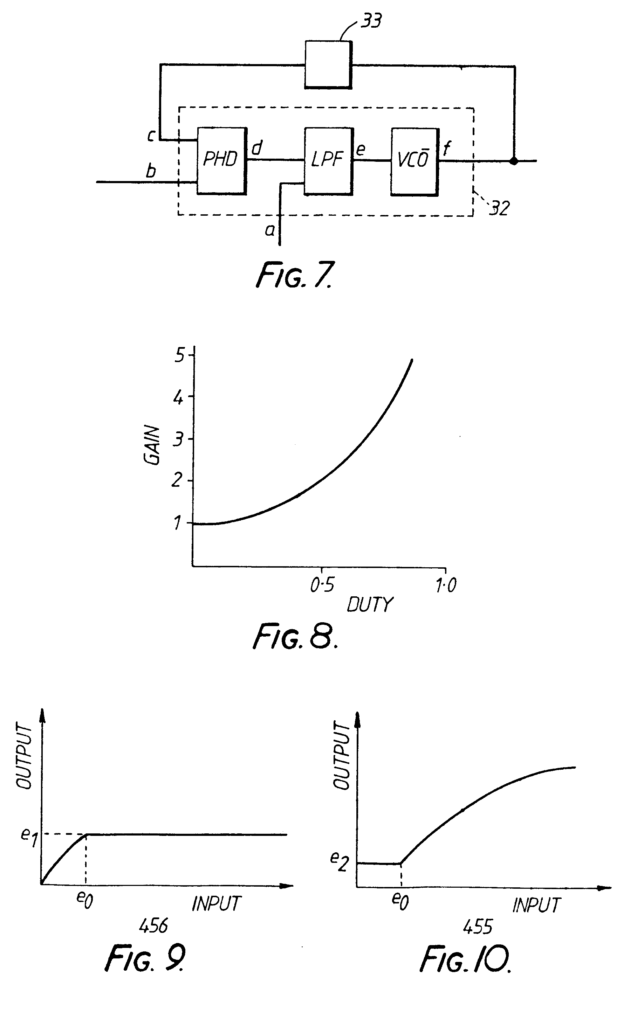

It is known from Toshiba Review (Vol. 35 No. 12 1980) and Figure 4 page 1067 in particular for a power converter apparatus constituted by a chopper and an inverter to utilise a solar battery in order to supply power to a load or power system. Installation of the chopper at the DC input of the inverter allows the chopper to perform a constant output voltage control, and the inverter to perform such a control that a pulse width is maintained at a specified value, whereby the harmonics components in the output voltage of the inverter are reduced.

In a power converter system that utilises a solar battery for a power source, there is substantially no period throughout the year in which the power converter apparatus receives an output of maximum power from the solar battery, i.e., the period to perform a full load operation, and the averaged load factor thereof throughout a year is approximately 20 to 80 %, so that the efficiency in a light-load operation of the power converter apparatus is regarded as of major importance. In addition, a solar battery has an extremely high manufacturing cost per kw, so that it is particularly significant to reduce the loss of the power converter apparatus as compared to a system that utilises a power source, such as a storage battery.

However, in the aforementioned conventional power converter apparatus, as described above, the chopper can achieve advantages, such as compactness of the output filter circuit and simplification of the control circuit, whereas this produces disadvantages, such that the loss developed by switching the DC circuit with the chopper is not reduced, even in a light-load operation. In general, the total loss $P_T$ ofthe switching elements can be expressed by the following equation:

$$P_T = (P_{ON} + P_{OFF}) \times f + P_S \qquad (1)$$

where $P_S$ represents a loss in steady ON state,
$P_{ON}$ a switching loss when turned on,
$P_{OFF}$ a switching loss when turned off, and
f a switching frequency.

In equation (1), the steady ON state loss $P_S$ of the second term is proportional to a steady ON current, however, the first term $(P_{ON} + P_{OFF}) \times f$ is a component proportional to the switching frequency f. Namely, the loss of the chopper can be separated into a fixed loss of the first term and a load loss of the second term, and there is provided such a disadvantage that, when the power converter apparatus is in a light-load operation, the proportion of the fixed loss becomes greater, whereby the efficiency of the power converter apparatus is reduced. Moreover, there are still other disadvantages, such that, should the switching frequency f be lowered in order to reduce the fixed loss without due consideration for its various aspects, the quick-response characteristics of chopper control are drastically deteriorated, in addition, a DC reactor required for such a chopper becomes exceptionally bulky, whereby the economic advantages and compactness of the power converter apparatus are also deteriorated.

According to the present invention, a power converter apparatus comprises a chopper connectible to a D.C. power source of variable voltage; an inverter connected to receive the D.C. output of the chopper and to supply converted A.C. power to a load; means for controlling the operation of the inverter; and a voltage control circuit for controlling the operation of the chopper; characterised in the provision of an error amplifier connected to receive as an input signal the difference between the output voltage of the converter apparatus and a predetermined reference value and wherein the output of the error amplifier is supplied to both an oscillator of the voltage control circuit to produce a signal having a frequency representative of the output of the error amplifier and to a phase shifter which supplies a switching signal of variable pulse width varied in synchronism with the output signal of said oscillator to the chopper, the arrangement being such

EP 0 181 187 B1

that the chopper is switched at a constant frequency except when the output of the error amplifier is less than a predetermined value whereupon the control circuit decreases the frequency of the switching signal applied to the chopper based on the output of the error amplifier to control the output of the apparatus.

In order that the invention may be more readily understood, it will now be described, by way of example only, with reference to the accompanying drawings, in which:-

Figure 1 shows an output characteristic diagram of a solar battery;

Figure 2 is a block diagram illustrating a power converter apparatus connected in parallel with a power system according to one embodiment of the present invention;

Figure 3 is a block diagram illustrating a specific circuit configuration of a portion of a voltage control circuit shown in Figure 2;

Figures 4 to 6 are characteristic diagrams illustrating operations of the voltage control circuit shown in Figure 3;

Figure 7 is a block diagram illustrating a specific circuit configuration of the phase locked loop circuit (PLL) of the power converter apparatus shown in Figure 2; and

Figures 8 to 10 are characteristic diagrams illustrating alternative operation of the voltage control circuit.

In Figure 2, the DC output of a solar battery 10 is converted into AC power by power converter apparatus 13, and the voltage of the thus converted AC power is converted into a specified voltage by a transformer 14. This AC power at the specified voltage is supplied to a power system 17 through a coupling reactor 15 and switch gear 16.

The power converter apparatus 13 is constituted by a chopper 11 and an inverter 12. Connection of the chopper 11 at the DC input of the inverter 12 allows the chopper 11 to perform a constant output voltage control, and the inverter 12 is to perform such a control that a pulse width is maintained to a specified value, whereby the harmonics components in the output voltage of the inverter 12 are reduced.

By use of the above-described control method, the capacity of an output filter circuit (not shown) that eliminates the harmonics in the output voltage can be reduced, and the configuration of the control circuit of the inverter 12 can be simplified.

In a control circuit 100, a voltage reference 40 and an inverter output voltage 22 are compared so as to produce a difference signal on line 44a which, in turn, is fed through a changeover switch 44 into an error amplifier 43. Similarly, a reactive power reference 41 and an output of a reactive power transducer 42 are compared so as to produce a difference signal on line 44b which, in turn, is fed through the changeover switch 44 into the error amplifier 43, an output of which is fed into a voltage control circuit 45 which generates a gate signal for the chopper 11.

In Figure 3, numerals 455 and 456 represent function generators that convert the output signal of the error amplifier circuit 43. Reference 457 is a V/F converter that converts the output signal from the function generator 456 into a frequency proportional thereto, 452 is a triangular waveform generator that generates a triangular waveform signal in synchronism with the frequency from the V/F converter 457, and 451 is a comparator that compares the output signals of the triangular waveform generator 452 and the function generator 455, respectively. The comparator 451 and the triangular waveform generator 452 together constitute a phase shifter 50.

The function generator 456 has characteristics as shown in Figure 4. Within a region in which the output of the error amplifier 43 is smaller than a specified input level $e_o$, the function generator 456 produces an output that increases in proportion to the output of the error amplifier 43, while, above the specified level $e_o$, a constant output signal $e_1$ is produced. The V/F converter 457 produces a frequency proportional to the output signal of the function generator 456, namely its output frequency increases or remains constant depending upon whether the output of the error amplifier 43 is below or above the specified level $e_o$. On the other hand, the function generator 455 has characteristics as shown in Figure 5 where, within a region in which the output of the error amplifier 43 is smaller than the specified input level $e_o$, the function generator 455 produces a constant output signal $e_2$ while, above the specified level $e_o$, it produces an output that increases in proportion to the output from the error amplifier 43.

The triangular waveform generator 452 receives an output signal from the oscillator so as to produce a triangular waveform signal in synchronism with the output signal as shown in Figure 6. The output signals of the triangular waveform generator 452 and the function generator 455 are fed into the comparator 451 so as to be compared in magnitude with each other.

In Figure 6, f shows the output signal of the V/F converter 457 and the frequency thereof is varied in accordance with characteristics shown in Figure 4. In Figure 6, G shows an output signal $G_2$ of the triangular waveform generator 452 and an output signal $G_1$ of the function generator 455 that has the characteristics shown in Figure 5, and, during periods when the latter is greater than the former, the comparator 451 produces an output signal of "1" state, as shown in Figure 6 H. When the output signal H

3

of the comparator 451 is in "1" state, it causes the switching elements of the chopper 11 to be conductive through a drive circuit 454.

The output signal of the triangular waveform generator 452 has a constant slope so that, in accordance with the magnitude of the output signal of the error amplifier 43, the comparison threshold level of the comparator 451 varies such that the conduction period of the switching element is varied.

On the other hand, in the inverter control circuit, the solar battery voltage is detected through a DC amplifier 20 that insulates the control circuit 100 from the main circuit and also adjusts the voltage gain. The thus detected DC voltage value 21 is compared with a DC voltage reference 30 so as to produce a difference signal on line 31a which, in turn, is fed into an error amplifier 31. Reference numeral 32 designates a so-called PLL (phase locked loop) circuit that receives three separate signals such as a signal a which is an output of the error amplifier 31, a signal b which is a phase reference signal derived from a voltage 23 of the power system 17, and a signal c which is an output of a frequency divider 33 that divides the output frequency of the PLL circuit 32. The output frequency is fed into a gate control circuit 34 which generates a gate signal for the inverter 12. Here, the PLL circuit 32, though conventionally well known, will be briefly described. Figure 7 is a block diagram illustrating an example of the PLL circuit 32, which is constituted by a phase error detector PHP, a low pass filter LPF, and a voltage controlled oscillator VCO. The phase error detector PHD produces a signal d proportional to a phase difference between a phase reference signal b and a phase feedback signal c. The signal d proportional to the phase difference is fed into the low pass filter LPF that eliminates the harmonics components thereof, and also amplifies the phase error. The voltage controlled oscillator VCO produces a frequency proportional to the output e of the low pass filter LPF. Output f of the voltage controlled oscillator VCO is fed into the frequency divider 33. If the number of stages in the frequency divider 33 is defined as N, an oscillating frequency of the voltage controlled oscillator VCO is N times the frequency of the phase reference signal b. Here, N is determined as arbitrary integer in accordance with the number of phases of the inverter 12 within the power converter apparatus 13. The output of the frequency divider 33 is fed into the phase error detector PHD as the phase feedback signal c, so that the oscillating frequency of the voltage controlled oscillator VCO is automatically controlled such that the phase of the phase reference signal b coincides with the phase of the phase feedback signal c. Here, the signal a of the PLL circuit 32, which is fed into the low pass filter LPF, functions such that a phase difference between the phase reference signal b and the phase feedback signal c can be arbitrarily determined.

Now, referring back to Figure 2, the operations thereof will be described.

A phase of the power system 17 is supplied as the phase reference signal b of the PLL circuit 32 so that the output frequency of the PLL circuit is in synchronism with the phase of the power system 17, thus, the phase of the power converter apparatus 13 is also in synchronism with the phase of the power system 17. In the state when the switch gear 16 is opened, the input and output terminals of the error amplifier 31 is shortcircuited by a switching device (not shown), as a result, there is not constituted the DC constant voltage control circuit that controls the phase of the inverter 122 by use of the DC voltage difference 31a.

Next, when the switch gear 16 is closed, while at the same time the input and output terminals of the error amplifier 31 are released from the shortcircuit, the phase of the power converter apparatus 13 is automatically controlled such that the solar battery voltage becomes equal to the DC voltage reference 30. In addition, when the changeover switch 44 is switched so as to select the difference signal on line 44a, the inverter output voltage 22 of the transformer 14 is automatically controlled so as to equal the voltage reference 40. Further, in the case where the switch gear 16 is closed and the changeover switch 44 selects the difference signal in line 44b, the output voltage of the power converter apparatus 13 is automatically controlled such that the reactive power of the power converter apparatus 13 becomes equal to the reactive power reference 41. As described above, in the method that controls the power converter apparatus 13, there is provided such an advantage that the selection of the DC voltage reference 30 as a reference value, taking into consideration the characteristics of a solar battery to be connected to the power converter apparatus 13, allows the power supply system to invariably operate at a maximum output point of the solar battery 10, regardless of insolation quantities.

In the case where the changeover switch 44 selects a difference signal on line 44a, the relationship between the output signal of the error amplifier 43 and a load factor of the power converter apparatus 13 is as follows. When the power converter apparatus 13 supplies a large current in a heavy-load operation, the output voltage 22 of the inverter 12 is lowered due to a voltage drop developed in proportion to the output current, so that the error amplifier 43 operates so as to increase the output voltage of the chopper 11, whereby the output signal of the error amplifier 43 is increased. While, on the contrary, when the power converter apparatus 13 is in a light-load operation, the output current thereof is small as compared to the heavy-load operation so that the amount of the voltage drop in the output voltage 22 of the inverter 12 also becomes small, whereby the error amplifier 43 operates so as to decrease the output voltage of the chopper 11, consequently, the output signal of the error amplifier 43 becomes small and reaches its equilibrium with the voltage reference 40. Here, the relationship between the solar battery voltage $Ed_1$ and the output voltage $Ed_2$ of the chopper 11 can be held as follows:

$$Ed_2 = F (tw \cdot fo) \times Ed_1 \qquad (2)$$

where F represents a known function that increases monotonously with respect to the input signal, tw is the pulse width of the output signal of the comparator 451, and fo is the frequency of the output signal of the V/F converter 457. Considering the case where the output signal of the error amplifier 43 is substantially zero, the pulse width tw is limited to a constant value by means of the function generator 455, and the input variables of the function F are proportional to the frequency fo. As can be seen from the characteristics of the function generator 456 shown in Figure 4, when the input signal, that is the output signal of the error amplifier 43 becomes smaller than the specified value $e_o$, the output signal of the function generator 456 decreases and the frequency fo in the equation (2) also decreases. When the output signal of the error amplifier 43 is defined as $e_c$, and in the case of $e_c < e_o$, the frequency fo becomes such that $fo = k_1 \cdot e_c$, thus, the output voltage $Ed_2$ can be expressed by use of the equation (2) as follows:

$$Ed_2 = F (K_1 \cdot tw \cdot e_c) \times Ed_1 \qquad (3)$$

where $K_1$ represents a proportional constant. Therefore, when the power converter apparatus 13 is being forced to perform a light-load operation, the frequency fo decreases so as to lower a fixed loss, so that such a disadvantage can be overcome that the efficiency of the power converter apparatus 13 is lowered in light-load operation as described above. Further, in the case of $e_c > e_o$, the frequency fo is constant and the pulse width tw is proportional to the output signal $e_c$ of the error amplifier 43 as shown in Figure 3, and the output voltage $Ed_2$ can be expressed by use of the equation (2) as follows:

$$Ed_2 = F (K_2 \cdot e_c \cdot fo) \qquad (4)$$

where $K_2$ represents a proportional constant.

In accordance with equation (4), the input variables of the function F are varied in proportion to the output signal $e_c$ of the error amplifier 43. Therefore, the input variables of the function F are varied, in either case of equation (3) or equation (4), in proportion to the output signal $e_c$ of the error amplifier 43, and should $K_1$ and $K_2$ be selected as the same value, the output voltage of the chopper 11 can be modified into a linear relation to the output signal $e_c$ of the error amplifier 43. In addition, also in the case when the changeover switch 44 is caused to select the difference signal on line 44b, application of a specified bias voltage to the function generators 455 and 456 in accordance with the reactive power reference 42 can achieve similar advantages.

Hereinafter, another embodiment of the present invention, where the chopper 11 is a booster chopper, will be described with reference to the accompanying drawings.

The relation between the input voltage and the output voltage of a booster chopper can be expressed by the following equation:

$$Ed_2 = \frac{1}{1 - duty} \cdot Ed_1 \qquad \ldots (5)$$

and has characteristics as shown in Figure 8.

The function generator 456 shown in Figure 3 now has characteristics as shown in Figure 9. Within a region in which the output of the error amplifier 43 is smaller than a specified input level $e_o$, the function generator 456 produces an output that increases with a characteristic that is the reverse of the curve shown in Figure 8, while above the specified level $e_o$ produces a constant output signal $e_1$. The V/F converter 457 produces a frequency proportional to the output signal of the function generator 456, namely its output frequency increases or remains constant depending upon whether the output of the error amplifier 43 is below or above the specified level $e_o$. On the other hand, the function generator 455 has characteristics as shown in Figure 10 where, within a region in which the output of the error amplifier 43 is smaller than the specified input level $e_o$, the function generator 455 produces a constant output signal $e_2$ while above the

EP 0 181 187 B1

specified level $e_o$ produces an output that increases with a characteristic that is the reverse of the curve shown in Figure 8.

According to this embodiment, there are provided advantages such that the gain of the output voltage of the booster chopper can be a constant value, and that the output voltage of the chopper can be proportional to the output of the error amplifier 43. Further, in this embodiment, it is naturally possible to achieve the same advantage such that the output power of the solar battery can be more efficient as the embodiment shown in Figure 4 and Figure 5.

The previous description has been made as to a power converter apparatus that utilises a solar battery as a power source, however, when using a fuel cell which also has large fluctuations in the voltage between no-load and full-load operations, the same advantages as the aforementioned can be similarly achieved. Further, in the above-described embodiments, the circuitry that utilises a triangular waveform generator and a comparator has been described as a specific example of a phase shifter, however, the present invention is not limited to this embodiment.

Moreover, in the aforementioned embodiments, the switching elements of the chopper 11 have not specifically been described, however, it is naturally possible to achieve the same advantages by use of such switching elements as transistors, thyristors and gate-turn-off (GTO) thyristors that are generally available.

As described above, there is provided a power converter apparatus constituted such that the chopper frequency can be varied in accordance with the output signal of the error amplifier, thus, the efficiency of the power converter apparatus can be improved by lowering the chopper frequency in the case of a light-load operation, whereby the output power of a solar battery or the like can be more efficiently utilised as compared to the conventional power converter apparatus that utilises a solar battery or the like as a power source.

## Claims

1. A power converter apparatus comprising a chopper (11) connectible to a D.C. power source (10) of variable voltage; an inverter (12) connected to receive the D.C. output of the chopper and to supply converted A.C. power to a load (17); means (32, 34) for controlling the operation of the inverter; and a voltage control circuit (45) for controlling the operation of the chopper; characterised in the provision of an error amplifier (43) connected to receive as an input signal the difference between the output voltage of the converter apparatus and a predetermined reference value (40) and wherein the output of the error amplifier is supplied to both an oscillator (457) of the voltage control circuit (45) to produce a signal having a frequency representative of the output of the error amplifier and to a phase shifter (50) which supplies a switching signal of variable pulse width varied in synchronism with the output signal of said oscillator to the chopper, the arrangement being such that the chopper is switched at a constant frequency except when the output of the error amplifier is less than a predetermined value whereupon the control circuit (45) decreases the frequency of the switching signal applied to the chopper based on the output of the error amplifier to control the output of the apparatus.

2. A power converter apparatus as claimed in claim 1, characterised in that the predetermined reference value is determined to correspond with maximum power from the D.C. power source.

3. A power converter apparatus as claimed in claim 1 or 2, characterised in that the control circuit comprises a first function generator (456) for producing an output that maintains a constant value within a region where the output of said error amplifier is larger than a specified level and decreases in proportion to the output of said error amplifier within the region where the output of said error amplifier is less than said level; a second function generator (455) for producing an output that maintains a constant value within a region where the output of said error amplifier is smaller than said level and increases in proportion to the output of said error amplifier within the region where the output of said error amplifier is larger than said level; a triangular waveform generator for producing a triangular waveform signal in synchronism with the output of said first function generator; and a comparator for comparing the output signal of said triangular waveform generator with the output of said second function generator to determine the conduction period of said chopper.

4. A power converter apparatus as claimed in claim 1 or 2, characterised in that said chopper comprises a booster chopper; and said voltage control circuit includes a first function generator for producing an output that maintains a constant value within a region where the output of said error amplifier is larger

6

than a specified level and producing a variable frequency signal having a characteristic which is the inverse of an input-output voltage characteristic of said chopper in relation to the output of said error amplifier within the region where the output of said error amplifier is larger than said level; a second function generator for producing an output that maintains a constant value within a region where the output of said error amplifier is smaller than said level and producing a signal having a characteristic which is the inverse of an input-output voltage characteristic of said chopper in relation to the output of said error amplifier within the region where the output of said error amplifier is larger than said level; a triangular waveform generator for producing a triangular waveform signal in synchronism with the output of said first function generator; and a comparator for comparing the output signal of said triangular waveform generator with the output of said second function generator to determine the conduction period of said chopper.

## Patentansprüche

1. Leistungsumwandlungsgerät mit einem Unterbrecher (11), der an eine Gleichstromquelle (10) von variabler Spannung angeschlossen werden kann, einem Inverter (12), der so angeschlossen ist, daß er die Gleichstromausgabe des Unterbrechers aufnimmt und umgewandelten Wechselstrom an einen Lastwiderstand (17) abgibt; Mittel (32, 34) zur Steuerung des Betriebs des Inverters; und eine Spannungs-Steuerschaltung (45) zur Steuerung des Betriebs des Unterbrechers; **gekennzeichnet** durch die Bereitstellung eines Abweichungsverstärkers (43), der so angeschlossen ist, daß er als Eingabesignal die Differenz zwischen der Ausgabespannung des Umwandlungsgeräts und einem vorbestimmten Bezugswert (40) empfängt, und wobei die Ausgabe des Abweichungsverstärkers sowohl zu einem Oszillator (457) der Spannungs-Steuerschaltung (45) geleitet wird, um ein Signal zu erzeugen, dessen Frequenz die Ausgabe des Abweichungsverstärkers repräsentiert, als auch zu einem Phasenschieber (50), der ein Schaltsignal variabler Pulsbreite erzeugt, welches synchron mit dem Ausgabe-Signal des Oszillators an den Unterbrecher variiert, wobei die Anordnung so ist, daß der Unterbrecher mit einer konstanten Frequenz geschaltet wird, außer wenn die Ausgabe des Abweichungsverstärkers einen vorherbestimmten Wert unterschreitet, worauf die Steuerschaltung (45) die Frequenz des Schaltsignals, das auf den Unterbrecher angewandt wird, basierend auf der Ausgabe des Abweichungsverstärkers vermindert, um die Ausgabe des Geräts zu steuern.

2. Leistungsumwandlungsgerät nach Anspruch 1, **dadurch gekennzeichnet**, daß der vorbestimmte Bezugswert entsprechend der Höchstleistung der Geichstromquelle festgelegt wird.

3. Leistungsumwandlungsgerät nach Anspruch 1 oder 2, **dadurch gekennzeichnet**, daß die Steuerschaltung aufweist: einen ersten Funktionsgenerator (456) zur Erzeugung einer Ausgabe mit einem konstantgehaltenen Wert innerhalb des Bereiches, in dem die Ausgabe des Abweichungsverstärkers über einer bestimmten Höhe liegt, und mit einer zu der Ausgabe des Abweichungsverstärkers proportionalen Abnahme innerhalb des Bereiches, in dem die Ausgabe des Abweichungsverstärkers unter der Höhe liegt; einen zweiten Funktionsgenerator (455) zur Erzeugung einer Ausgabe mit einem konstantgehaltenen Wert innerhalb des Bereiches, in dem die Ausgabe des Abweichungsverstärkers unter der Höhe liegt, und mit einem zu der Ausgabe des Abweichungsverstärkers proportional abnehmenden Wert innerhalb des Bereiches, in dem die Ausgabe des Abweichungsverstärkers über der Höhe liegt; einen Dreieckswellen-Generator zur Erzeugung eines Dreieckswellen-Signals synchron mit der Ausgabe des ersten Funktionsgenerators; und einen Vergleicher zum Vergleichen der Ausgabe-Signale des Dreieckswellen-Generators mit der Ausgabe des zweiten Funktionsgenerators, um die Leitfähigkeitsperiode des Unterbrechers festzulegen.

4. Leistungsumwandlungsgerät nach Anspruch 1 oder 2, **dadurch gekennzeichnet**, daß der Unterbrecher einen Verstärker-Unterbrecher aufweist; und daß die Spannungs-Steuerschaltung einen ersten Funktionsgenerator zur Erzeugung einer Ausgabe beinhaltet, die einen konstanten Wert innerhalb des Bereichs, in dem die Ausgabe des Abweichungsverstärkers über einer bestimmten Höhe liegt, aufrechterhält und die ein variables Frequenzsignal erzeugt mit einer Charakteristik, welche umgekehrt ist zu der Eingabe-Ausgabe-Spannungs-Charakteristik des Unterbrechers im Verhältnis zu der Ausgabe des Abweichungsverstärkers innerhalb des Bereichs, in dem die Ausgabe des Abweichungsverstärkers über der Höhe liegt; einen zweiten Funktionsgenerator zur Erzeugung einer Ausgabe, die einen konstanten Wert innerhalb des Bereichs, in dem die Ausgabe des Abweichungsverstärkers unterhalb der Höhe liegt, aufrechterhält, und die ein Signal erzeugt mit einer Charakteristik, welche umgekehrt ist

7

zu der Eingabe-Ausgabe-Spannungs-Charakteristik des Unterbrechers im Verhältnis zu der Ausgabe des Abweichungsverstärkers innerhalb des Bereichs, in dem die Ausgabe des Abweichungsverstärkers über der Höhe liegt; einen Dreieckswellen-Generator zur Erzeugung von Dreieckswellen-Signalen synchron mit der Ausgabe des ersten Funktionsgenerators; und einen Vergleicher zum Vergleichen der Ausgabe-Signale des Dreieckswellen-Generators mit der Ausgabe des zweiten Funktionsgenerators, um die Leitfähigkeitsperiode des Unterbrechers festzulegen.

**Revendications**

1. Appareil de conversion d'énergie qui comprend un chopper (11) pouvant être connecté à une source de courant continu (10) dont la tension est variable; un inverseur (12) connecté pour recevoir le courant continu de sortie du chopper et pour alimenter une charge (17) avec du courant alternatif converti; des moyens (32, 34) pour commander le fonctionnement de l'inverseur; et un circuit de commande de tension (45) pour commander le fonctionnement du chopper; caractérisé en ce qu'il possède un amplificateur d'erreurs (43) monté de façon à recevoir comme signal d'entrée la différence entre la tension de sortie du convertisseur et une valeur de fréquence prédéterminée (40) et en ce que les signaux de sortie de l'amplificateur d'erreurs sont fournis à la fois à un oscillateur (457) du circuit de commande de tension (45) afin de produire un signal ayant une fréquence représentative des signaux de sortie de l'amplificateur d'erreurs et à un déphaseur (50) qui fournit un signal de commutation composé d'impulsions dont la largeur varie en synchronisme avec le signal de sortie dudit oscillateur, au chopper, la disposition étant telle que le chopper est commuté à une fréquence constante, sauf quand la sortie de l'amplificateur d'erreurs est inférieure à une certaine limite prédéterminée, à la suite de quoi le circuit de commande (45) diminue la fréquence du signal de commutation appliqué au chopper sur la base du signal de sortie de l'amplificateur d'erreurs pour commander la sortie de l'appareil.

2. Appareil selon la revendication 1, caractérisé en ce que la valeur de référence est déterminée pour correspondre avec le maximum d'énergie de la source de courant continu.

3. Appareil de conversion d'énergie selon la revendication 1 ou 2, caractérisé en ce que le circuit de commande comprend un premier générateur de fonctions (456) pour produire des signaux de sortie qui maintiennent une valeur constante dans une région où le niveau de la sortie dudit amplificateur d'erreurs est au-dessus d'un certain niveau spécifié et qui décroît proportionnellement à la sortie dudit amplificateur d'erreurs dans une région où la sortie dudit amplificateur d'erreurs est inférieure audit niveau; un second générateur de fonctions (455) pour produire un signal de sortie qui maintient une valeur constante dans une région où le signal de sortie dudit amplificateur d'erreurs est plus petit que ledit niveau et augmente en proportion de la sortie dudit amplificateur d'erreurs dans la région où le niveau de sortie dudit amplificateur d'erreurs est plus grand que ledit niveau; un générateur d'ondes triangulaires pour produire un signal triangulaire en synchronisme avec les signaux de sortie dudit premier générateur de fonctions; et un comparateur pour comparer les signaux de sortie dudit générateur de signaux triangulaires avec ceux dudit second générateur de fonctions afin de déterminer la période de conduction dudit chopper.

4. Appareil de conversion d'énergie selon la revendication 1 ou 2, caractérisé en ce que ledit chopper comprend un chopper booster ou survolté; et en ce que ledit circuit de commande de tension inclut un premier générateur de fonctions pour produire un signal de sortie qui maintient une valeur constante dans une région où le signal de sortie dudit amplificateur d'erreurs est plus grand qu'un niveau spécifié qui produit un signal de fréquence variable ayant une courbe caractéristique qui est l'inverse de celle de la courbe caractéristique des tensions entrée-sortie dudit chopper par rapport à la sortie dudit amplificateur d'erreurs dans la région où le niveau de sortie dudit amplificateur d'erreurs est plus grand que ledit niveau; un second générateur de fonctions pour produire un signal de sortie qui maintient une valeur constante dans une région où le niveau de sortie dudit amplificateur d'erreurs est plus petit que ledit niveau et qui produit un signal dont la courbe caractéristique est l'inverse de la courbe caractéristique de la tension d'entrée/tension de sortie dudit chopper par rapport aux signaux de sortie dudit amplificateur d'erreurs dans la région où le niveau des signaux de sortie dudit amplificateur d'erreurs est plus grand que ledit niveau; un générateur d'ondes ou de signaux triangulaires pour produire un signal de forme triangulaire en synchronisme avec les signaux de sortie dudit premier générateur de fonctions; et un comparateur pour comparer les signaux de sortie dudit générateur de signaux triangulaires avec les signaux de sortie dudit second générateur de fonctions afin de déterminer la période de conduction dudit chopper.

MAXIMUM OUTPUTS

VOLTAGE. POWER

CURRENT

FIG.1.

FIG.2.

FIG. 3.

456

FIG. 4.

455

FIG. 5.

FIG. 6.

FIG. 7.

FIG. 8.

456

FIG. 9.

455

FIG. 10.